# EUROPÄISCHE PATENTSCHRIFT

(11) **EP 2 090 816 B1**
(45) Veröffentlichungstag und Bekanntmachung des Hinweises auf die Patenterteilung: **09.06.2010**
(21) Anmeldenummer: 08002938.2
(22) Anmeldetag: 18.02.2008
(51) Int. Cl.: F16L 41/06

(54) **Gekrümmte Dichtung für eine Anbohrschelle**
Cambered seal for a tapping saddle
Joint arqué pour une selle de percement

(43) Veröffentlichungstag der Anmeldung: 19.08.2009
(73) Patentinhaber: Carl Freudenberg KG, 69469 Weinheim (DE)
(72) Erfinder: Vasilico, Alexander, 6306 Söll (AT)

(56) Entgegenhaltungen:
- US-A1- 2002 000 719
- US-A1- 2007 205 004

## Beschreibung

### Technisches Gebiet

Die Erfindung betrifft eine Dichtung gemäß dem Oberbegriff des Patentanspruchs 1.

### Stand der Technik

Dichtungen der genannten Art finden in so genannten Anbohrschellen Verwendung, wie sie beispielsweise in der DE 203 05 736 U1 beschrieben sind. Anbohrschellen umgreifen ein Rohr, welches angebohrt werden soll. Die anzubohrenden Rohre führen Gas oder Wasser und werden während des Bohrvorgangs nicht entleert. Daher ist es notwendig, die Anbohrstelle hinreichend abzudichten, damit das im anzubohrenden Rohr geführte Medium nicht in die Umgebung ausdringen kann.

Um ein Ausdringen des geführten Mediums zu verhindern, werden speziell abgedichtete Bohrfutter verwendet. Das dem Bohrer entgegenströmende geführte Medium kann durch einen Bypassstutzen aus der Anbohrschelle kontrolliert abgeführt werden.

Insbesondere ist es aber notwendig, dass die Anbohrstelle und damit der Bohrer von einer Dichtung umgeben sind, die verhindert, dass das geführte Medium in radialer Richtung nach außen austreten kann.

Die aus dem Stand der Technik bekannten Dichtungen werden gewöhnlich durch die Anbohrschelle gegen die Außenwandung des anzubohrenden Rohres gepresst, um eine dichte Anlage zu gewährleisten.

Aus dem Stand der Technik ist es bekannt, als Dichtung einen O-Ring zu verwenden. Häufig weisen die anzubohrenden Rohre jedoch relativ tiefe Riefen auf oder zeigen eine starke Krümmung. Die O-Ringe müssen daher besonders sorgfältig an die Außenwandung des Rohrs angelegt und angepresst werden, um eine dichtende Anlage sicherzustellen. Oft ist es sogar notwendig, die Außenwandung des Rohrs vorzubehandeln, um eine dichtende Anlage der Dichtung sicherzustellen. Diese Vorgehensweise ist aufwendig und teuer.

Aus der US 2007/0205004 A1 und der US 2002/0000719 A1 sind Dichtungen bekannt, die mit einer Anbohrschelle zusammenwirken, die einen in die Anbohrstelle hineinragenden Zapfen aufweisen.

### Darstellung der Erfindung

Der Erfindung liegt daher die Aufgabe zugrunde, eine Dichtung der eingangs genannten Art derart auszugestalten und weiterzubilden, dass eine dichtende Anlage an der Außenwandung eines anzubohrenden Rohres mit einer Anbohrschelle problemlos realisierbar ist.

Erfindungsgemäß wird die voranstehende Aufgabe mit den Merkmalen des Patentanspruchs 1 gelöst. Danach ist eine Dichtung der eingangs genannten Art **dadurch gekennzeichnet, dass** einem freien Ende der ersten Dichtlippe zwei voneinander abgewandte Dichtbereiche zugeordnet sind, wobei der erste Dichtbereich als Dichtkante und der zweite Dichtbereich als abragender Wulst ausgebildet ist, und wobei der Grundkörper eine vierte umlaufende Dichtlippe aufweist.

Erfindungsgemäß ist erkannt worden, dass ein vorgekrümmter Grundkörper erlaubt, die Dichtung nahezu spannungsfrei an eine gekrümmte Außenwandung eines Rohres anzulegen. Insbesondere ist erkannt worden, dass eine Vorkrümmung die Ausbildung von Stauchungen des Grundkörpers verhindert, wenn die Anbohrschelle den Grundkörper von seiner Ausgangsgestalt in die Anpressgestalt verbringt. Durch Stauchungen können Spalte auftreten. Die Ausbildung solcher Spalte wird durch die erfindungsgemäße Ausgestaltung wirksam vermieden. Des Weiteren ist sichergestellt, dass im Grundkörper keine Spannungsspitzen auftreten, wenn die Anbohrschelle die Dichtung gegen die Außenwandung des Rohres presst.

Einem freien Ende der ersten Dichtlippe sind zwei voneinander abgewandte Dichtbereiche zugeordnet. Durch diese konkrete Ausgestaltung kann ein erster Dichtbereich der Außenwandung des Rohrs und der zweite Dichtbereich der Innenwandung der Anbohrschelle zugeordnet werden.

Dabei ist der erste Dichtbereich als Dichtkante und der zweite Dichtbereich als abragender Wulst ausgebildet. Die Dichtkante liegt durch eine Presspassung sicher an der Außenwandung des Rohres an. Ein abragender Wulst stellt sicher, dass die Dichtlippe nur geringfügig umgebogen werden muss, um an der Innenwandung der Anbohrschelle zur Anlage zu kommen. Des Weiteren kann ein abragender Wulst als Abstandshalter dienen, der ein zu festes Anpressen der Dichtung an die Außenwandung des Rohrs verhindert.
Der Grundkörper weist eine zweite umlaufende und umbiegbare Dichtlippe auf. Durch diese konkrete Ausgestaltung kann eine zweite Dichtflanke an der Innenwandung der Anbohrschelle geschaffen werden.

Der Grundkörper weist eine dritte umlaufende Dichtlippe auf, die eine dritte Dichtflanke an der Innenwandung der Anbohrschelle definiert.

Schließlich weist der Grundkörper eine vierte umlaufende Dichtlippe auf, die an der Außenwandung des Rohrs anliegt. Hierdurch können auf der Außenwandung des Rohres zwei Dichtflanken geschaffen werden. Hierdurch wird die Dichtheit der Anbohrstelle erhöht.

Folglich ist die eingangs genannte Aufgabe gelöst.

Der Grundkörper könnte in seiner Ausgangsgestalt derart vorgekrümmt sein, dass die erste Dichtlippe in ihrer Gesamtheit im Wesentlichen der Außenwandung eines Rohrs folgt und sich nahezu spalt- und spannungsfrei an dieses anschmiegt. Diese konkrete Ausgestaltung stellt sicher, dass die Dichtung unter nur geringer Kraftbeaufschlagung gleichmäßig fest gegen die Außenwandung des Rohres angedrückt werden kann, um eine dichtende Anlage sicherzustellen.

Die gekrümmte Fläche könnte in ihren Hauptrichtungen entgegengesetzt gekrümmt sein, Die gekrümmte Fläche muss dabei keinesfalls gleichmäßig oder symmetrisch gekrümmt sein, sondern kann asymmetrisch gekrümmt sein. Eine solche Dichtung eignet sich beim Einsatz an deformierten Rohren, die beispielsweise Beulen oder Ausbuchtungen aufweisen.

Die gekrümmte Fläche könnte als Sattelfläche ausgebildet sein. Unter einer Sattelfläche wird in der Geometrie eine Regelfläche verstanden, die in ihren beiden Hauptrichtungen entgegengesetzt, nämlich antiklastisch, gekrümmt ist, der Name Sattelfläche hat seinen Ursprung im Wort Pferdesattel bzw. dem Sattel im Gelände, welcher gleichzeitig einen Übergang zwischen zwei Bergen und zwei Tälern darstellt. Die Ausbildung der Fläche als Sattelfläche eignet sich besonders bei regelmäßig zylindrisch ausgeformten Rohren, die keine Deformierungen wie Beulen oder Ausbuchtungen zeigen. An ein solches gleichmäßiges Rohr schmiegt sich die Dichtlippe ohne Ausbildung von Spalten an.

Vor diesem Hintergrund ist denkbar, dass die erste Dichtlippe umbiegbar ist. eine umbiegbare Dichtlippe erlaubt, die Dichtlippe an zwei Flächen zugleich anzulegen.

Der Grundkörper könnte mindestens eine Einrichtung eines Poka-Yoke-Systems aufweisen. Der japanische Ausdruck Poka-Yoke bezeichnet ein aus mehreren Elementen bestehendes System, welches technische Vorkehrungen zur sofortigen Fehleraufdeckung und Verhinderung umfasst. Ein Poka-Yoke-System macht von dem Schlüssel-Schloss-Prinzip Gebrauch, um eine sichere Positionierung der Dichtung in der Anbohrschelle sicherzustellen.

Die hier beschriebenen Dichtungen eignen sich in besonderer Weise für Rohre mit einem Durchmesser von 90 bis 225 mm. Rohre mit diesen Durchmessern zeigen eine Krümmung der Außenwandung, die zur dichtenden Anlage einer gekrümmten Dichtung bedürfen.

Eine Anordnung könnte eine Dichtung der hier beschriebenen Art, ein Rohr und eine Anbohrschelle umfassen, wobei die Dichtung zwischen der Außenwandung des Rohrs und der Innenwandung der Anbohrschelle positioniert ist. Dabei könnte die Dichtung teilweise in einer Nut in der Innenwandung der Anbohrschelle aufgenommen sein. Die Ausbildung einer Nut verhindert ein Verrutschen der Dichtung, wenn die Anbohrschelle die Dichtung gegen die Außenwandung des Rohrs presst.

Vor diesem Hintergrund ist denkbar, dass die erste Dichtlippe der Dichtung mit einem Wulst an der Innenwandung der Anbohrschelle und mit einer vom Wulst abragenden Dichtkante an der Außenwandung des Rohrs anliegt Hierdurch wird ein Eindringen des im Rohr geführten Mediums in die Nut verhindert.

Zwei Dichtlippen der Dichtung könnten an der Innenwand der Nut, vorzugsweise am Nutgrund, und zwei Dichtlippen an der Außenwandung des Rohres anliegen. Auf der Außenwandung des Rohres werden hierdurch zwei Dichtflanken geschaffen. Innerhalb des Nutgrunds werden ebenfalls zwei Dichtflanken geschaffen, so dass eine Abdichtung der Anbohrstelle sichergestellt ist.

Der Grundkörper der Dichtung könnte einen Bohrer umgeben. Durch diese konkrete Ausgestaltung wird ein Ringraum geschaffen, der sich mit im Rohr geführtem Medium füllen kann.

Es gibt nun verschiedene Möglichkeiten, die Lehre der vorliegenden Erfindung in vorteilhafter Weise auszugestalten und weiterzubilden. Dazu ist einerseits auf die nachfolgenden Ansprüche, andererseits auf die nachfolgende Erläuterung eines bevorzugten Ausführungsbeispiels der erfindungsgemäßen Dichtung anhand der Zeichnung zu verweisen.

In Verbindung mit der Erläuterung des bevorzugten Ausführungsbeispiels anhand der Zeichnung werden auch im Allgemeinen bevorzugte Ausgestaltungen und Weiterbildungen der Lehre erläutert.

### Kurzbeschreibung der Zeichnung

In der Zeichnung zeigen
- Fig. 1: mehrere Ansichten einer Dichtung mit einem gekrümmten Grundkörper,
- Fig. 2: eine Seitenansicht der Dichtung gemäß Fig. 1,
- Fig. 3: eine Draufsicht auf die Dichtung gemäß Fig. 1 und Fig. 2,
- Fig. 4: ein Ausschnitt der Dichtung, die in einer Nut der Anbohrschelle eingelegt ist,
- Fig. 5: eine Schnittansicht des Grundkörpers der Dichtung,
- Fig. 6: eine Schnittansicht des Grundkörpers der Dichtung, wobei eine Einrichtung eines Poka-Yoke-Systems erkennbar ist, und
- Fig. 7: eine Anordnung, welche eine Dichtung, ein Rohr und eine Anbohrschelle umfasst

### Ausführung der Erfindung

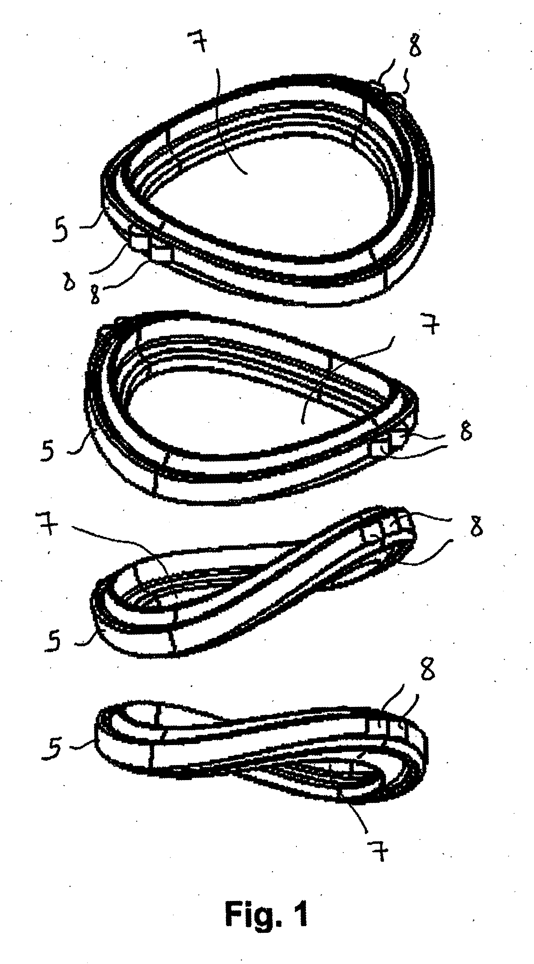

Fig. 1 zeigt eine Dichtung zum Einlegen zwischen der Außenwandung 1 eines Rohres 2 und der Innenwandung 3 einer Anbohrschelle 4. Die Dichtung umfasst einen elastischen Grundkörper 5, wobei der Grundkörper 5 elastisch von einer Ausgangsgestalt in eine Anpressgestalt verbringbar ist und wobei der Grundkörper 5 mindestens eine erste umlaufende Dichtlippe 6 aufweist Der Grundkörper 5 weist eine Vorkrümmung auf und begrenzt eine gekrümmte Fläche 7.

Der Grundkörper 5 ist in seiner Ausgangsgestalt derart vorgekrümmt, dass die erste Dichtlippe 6 in ihrer Gesamtheit im Wesentlichen der Außenwandung 1 eines Rohrs 2 folgt und sich nahezu spalt- und spannungsfrei an dieses anschmiegt.

Die gekrümmte Fläche 7 ist in ihren Hauptrichtungen entgegengesetzt gekrümmte.

Die gekrümmte Fläche 7 ist als Sattelfläche ausgebildet. Der Grundkörper 5 weist eine Einrichtung 8 eines Poka-Yoke-Systems auf. Die Einrichtung 8 umfasst halbkreisförmige Ausstülpungen, die in radialer Richtung vom Grundkörper 5 abragen. Diese Einrichtung 8 stellt eine fehlerfreie Positionierung der Dichtung in der Anbohrschelle 4 sicher.

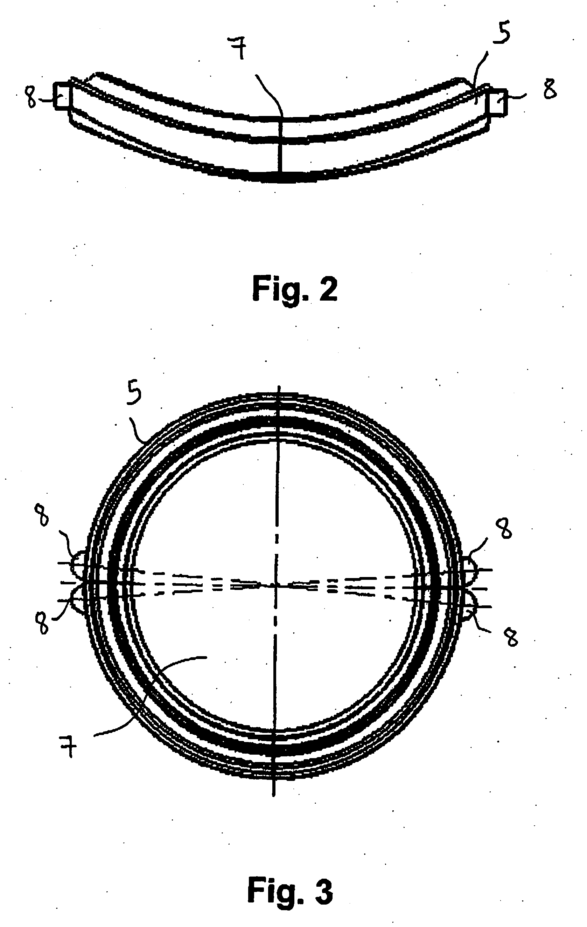

Fig. 2 zeigt die Dichtung gemäß Fig. 1 in einer Seitenansicht. Fig. 3 zeigt die Dichtung gemäß Fig. 1 in einer Draufsicht. Sowohl in Fig. 2 als in Fig. 3 ist erkennbar, dass der Grundkörper 5 eine gekrümmte Fläche 7 begrenzt. Des Weiteren ist die Einrichtung 8 erkennbar, die halbkreisförmige Ausstülpungen aufweiset, die in radialer Richtung vom Grundkörper 5 abragen.

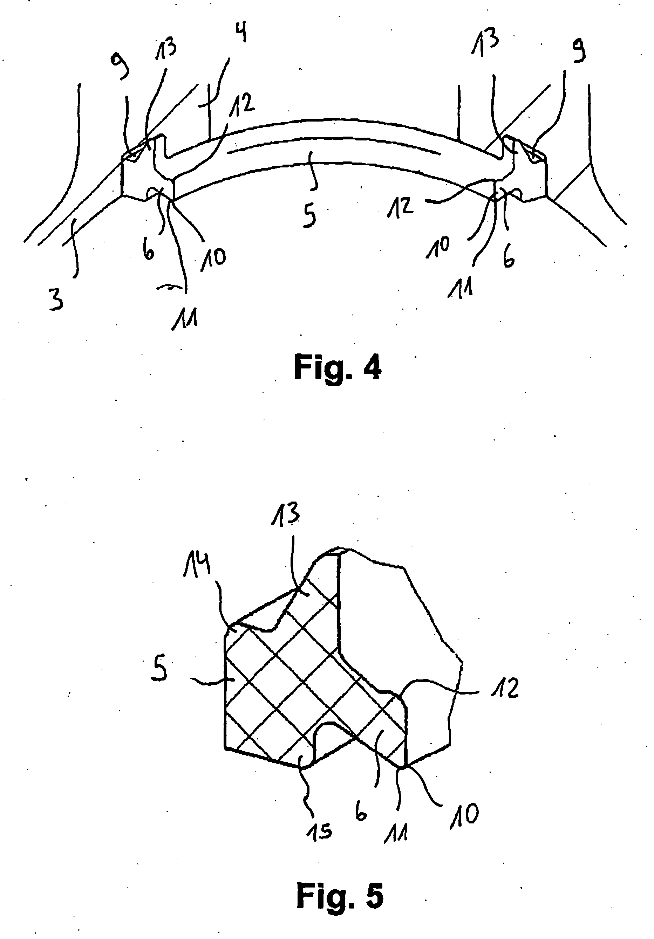

Fig. 4 zeigt einen Ausschnitt des Grundkörpers 5, der in einer Nut 9 in der Innenwandung 3 der Anbohrschelle 4 eingelegt ist. Der Grundkörper 5 weist eine erste umlaufende Dichtlippe 6 auf, die umbiegbar ist. Einem freien Ende 10 der ersten Dichtlippe 6 sind zwei voneinander abgewandte Dichtbereiche zugeordnet. Der erste Dichtbereich ist als Dichtkante 11 und der zweite Dichtbereich als abragender Wulst 12 ausgebildet.

Der Grundkörper 5 weist eine zweite umlaufende und umbiegbare Dichtlippe 13 auf.

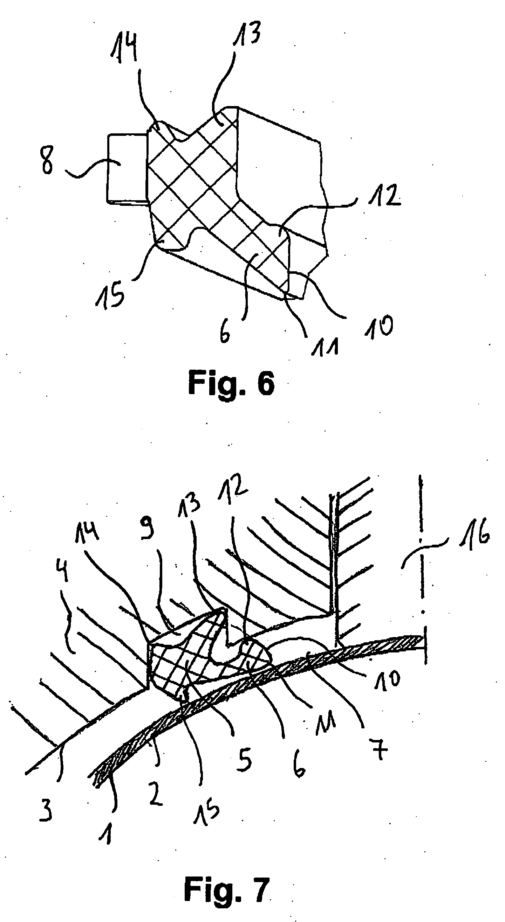

Fig. 5 und 6 zeigen eine Schnittansicht des Grundkörpers 5 in verschiedenen Schnittebenen. Fig. 5 und Fig. 6 zeigen die dritte umlaufende Dichtlippe 14 und die vierte umlaufende Dichtlippe 15. Des Weiteren zeigen die Figuren 5 und 6 die erste umbiegbare Dichtlippe 6, die an ihrem freien Ende 10 zwei voneinander abgewandte Dichtbereiche aufweist. Dabei ist der erste Dichtbereich als Dichtkante 11 und der zweite Dichtbereich als abragender Wulst 12 ausgebildet.

Fig. 7 zeigt eine Anordnung umfassend eine Dichtung, ein Rohr 2 und eine Anbohrschelle 4. Dabei ist die Dichtung zwischen der Außenwandung 1 des Rohrs 2 und der Innenwandung 3 der Anbohrschelle 4 positioniert. Die Dichtung ist teilweise in einer Nut 9 in der Innenwandung 3 der Anbohrschelle 4 aufgenommen. Die erste Dichtlippe 6 der Dichtung liegt mit einem Wulst 12 an der Innenwandung der Anbohrschelle 4 an. Mit der Dichtkante 11 liegt das freie Ende 10 der Dichtlippe 6 an der Außenwandung 1 des Rohrs 2 an.

Zwei Dichtlippen 13, 14 der Dichtung liegen am Nutgrund der Nut 9 und zwei Dichtlippen 6 und 15 liegen an der Außenwandung 1 des Rohrs 2 an. Dabei umgibt der Grundkörper 5 der Dichtung einen Bohrer 16.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche verwiesen.

Abschließend sei ganz besonders hervorgehoben, dass das zuvor ausgewählte Ausführungsbeispiigl lediglich zur Erörterung der erfindungsgemäßen Lehre dient, diese jedoch nicht auf dieses Ausführungsbeispiel einschränkt.

## Patentansprüche

1. Dichtung zum Einlegen zwischen der Außenwandung (1) eines Rohrs (2) und der Innenwandung (3) einer Anbohrschelle (4), umfassend einen elastisch deformierbaren ringförmigen Grundkörper (5), wobei der Grundkörper (5) elastisch von einer Ausgangsgestalt in eine Anpressgestalt verbringbar ist, wobei der Grundkörper (5) mindestens eine erster umlaufende Dichtlippe (6) aufweist, wobei der Grundkörper (5) eine Vorkrümmung aufweist und eine gekrümmte Fläche (7) begrenzt, wobei der Grundkörper (5) eine zweite umlaufende und umbiegbare Dichtlippe (13) aufweist und wobei der Grundkörper (5) eine dritte umlaufende Dichtlippe (14) aufweist, **dadurch gekennzeichnet, dass** einem freien Ende (10) der ersten Dichtlippe (6) zwei voneinander abgewandte Dichtbereiche zugeordnet sind, wobei der erste Dichtbereich als Dichtkante (11) und der zweite Dichtbereich als abragender Wulst (12) ausgebildet ist und wobei der Grundkörper (5) eine vierte umlaufende Dichtlippe (15) aufweist.

2. Dichtung nach Anspruch 1, **dadurch gekennzeichnet, dass** der Grundkörper (5) in seiner Ausgangsgestalt derart vorgekrümmt ist, dass die erste Dichtlippe (6) in ihrer Gesamtheit im Wesentlichen der Außenwandung (1) eines Rohrs (2) folgt und sich nahezu spalt- und spannungsfrei an dieses anschmiegt,

3. Dichtung nach Anspruch 1 oder 2, **dadurch gekennzeichnet, dass** die gekrümmte Fläche (7) in ihren Hauptrichtungen entgegengesetzt gekrümmt ist.

4. Dichtung nach einem der Ansprüche 1 bis 3, **dadurch gekennzeichnet, dass** die gekrümmte Fläche (7) als Sattelfläche ausgebildet ist.

5. Dichtung nach einem der Ansprüche 1 bis 4, **dadurch gekennzeichnet, dass** die erste Dichtlippe (6) umbiegbar ist.

6. Dichtung nach einem der Ansprüche 1 bis 5, **dadurch gekennzeichnet, dass** der Grundkörper mindestens eine Einrichtung (8) eines Poka-Yoke-Systems aufweist.

7. Anordnung, umfassend eine Dichtung nach einem der voranstehenden Ansprüche, ein Rohr (2) und eine Anbohrschelle (4), wobei die Dichtung zwischen der Außenwandung (1) des Rohrs (2) und der Innenwandung (3) der Anbohrschelle (4) positioniert ist und wobei die Dichtung teilweise in einer Nut (9) in der Innenwandung (3) der Anbohrschelle (4) aufgenommen ist.

8. Anordnung nach Anspruch 7, **dadurch gekennzeichnet, dass** die erste Dichtlippe (6) der Dichtung mit dem Wulst (12) an der Innenwandung (3) der Anbohrschelle (4) und mit der vom Wulst (12) abgewandten Dichtkante (11) an der Außenwandung (1) des Rohrs (2) anliegt.

9. Anordnung nach Anspruch 7 oder 8, **dadurch gekennzeichnet, dass** zwei Dichtlippen (13, 14) der Dichtung an der Innenwand der Nut (9), vorzugsweise am Nutgrund, und zwei Dichtlippen (6,15) an der Außenwandung (1) des Rohrs (2) anliegen.

10. Anordnung nach einem der Ansprüche 7 bis 9, **dadurch gekennzeichnet, dass** der Grundkörper (5) der Dichtung einen Bohrer (16) umgibt.

## Claims

1. Seal for inserting between the outer wall (1) of a pipe (2) and the inner wall (3) of a tapping saddle (4), comprising an elastically deformable annular basic body (5), wherein the basic body (5) can be brought elastically from an initial form into a pressing form, wherein the basic body (5) has at least a first peripheral sealing lip (6), wherein the basic body (5) has a pre-curvature and delimits a curved area (7), wherein the basic body (5) has a second peripheral and bendable sealing lip (13), and wherein the basic body (5) has a third peripheral sealing lip (14), **characterized in that** two sealing regions facing away from one another are assigned to a free end (10) of the first sealing lip (6), wherein the first sealing region is designed as a sealing edge (11) and the second sealing region is designed as a protruding bead (12), and wherein the basic body (5) has a fourth peripheral sealing lip (15).

2. Seal according to Claim 1, **characterized in that** the initial form of the basic body (5) has a pre-curvature such that the entire first sealing lip (6) substantially follows the outer wall (1) of a pipe (2) and fits snugly against the latter in a virtually gap-free and tension-free manner.

3. Seal according to Claim 1 or 2, **characterized in that** the main directions of the curved area (7) have opposing curvatures.

4. Seal according to one of Claims 1 to 3, **characterized in that** the curved area (7) is designed as a saddle surface.

5. Seal according to one of Claims 1 to 4, **characterized in that** the first sealing lip (6) can be bent.

6. Seal according to one of Claims 1 to 5, **characterized in that** the basic body has at least one device (8) of a poka-yoke system.

7. Arrangement comprising a seal according to one of the preceding claims, a pipe (2) and a tapping saddle (4), wherein the seal is positioned between the outer wall (1) of the pipe (2) and the inner wall (3) of the tapping saddle (4) and wherein part of the seal is accommodated in a groove (9) in the inner wall (3) of the tapping saddle (4).

8. Arrangement according to Claim 7, **characterized in that** the first sealing lip (6) of the seal bears with the bead (12) against the inner wall (3) of the tapping saddle (4) and with the sealing edge (11), facing away from the bead (12), against the outer wall (1) of the pipe (2).

9. Arrangement according to Claim 7 or 8,
**characterized in that** two sealing lips (13, 14) of the seal bear against the inner wall of the groove (9), preferably against the groove base, and two sealing lips (6, 15) bear against the outer wall (1) of the pipe (2).

10. Arrangement according to one of Claims 7 to 9, **characterized in that** the basic body (5) of the seal surrounds a drill bit (16).

## Revendications

1. Garniture d'étanchéité pour l'insertion entre la paroi extérieure (1) d'un tuyau (2) et la paroi intérieure (3) d'une selle de prise (4), comprenant un corps de base (5) de forme annulaire déformable élastiquement, le corps de base (5) pouvant être amené élastiquement d'une configuration de départ dans une configuration de pressage, le corps de base (5) présentant au moins une première lèvre d'étanchéité périphérique (6), le corps de base (5) présentant une courbure initiale et délimitant une surface courbe (7), le corps de base (5) présentant une deuxième lèvre d'étanchéité (13) périphérique qui peut être recourbée, et le corps de base (5) présentant une troisième lèvre d'étanchéité périphérique (14), **caractérisée en ce que** deux régions d'étanchéité distales l'une de l'autre sont associées à une extrémité libre (10) de la première lèvre d'étanchéité (6), la première région d'étanchéité étant réalisée sous forme d'arête d'étanchéité (11) et la deuxième région d'étanchéité étant réalisée sous forme de bourrelet saillant (12) et le corps de base (5) présentant une quatrième lèvre d'étanchéité périphérique (15).

2. Garniture d'étanchéité selon la revendication 1, **caractérisée en ce que** le corps de base (5) présente une courbure initiale dans sa configuration de départ, de telle sorte que la première lèvre d'étanchéité (6), dans sa totalité, suive essentiellement la paroi extérieure (1) d'un tuyau (2) et épouse sa forme pratiquement sans fente et sans contrainte.

3. Garniture d'étanchéité selon la revendication 1 ou 2, **caractérisée en ce que** la surface courbe (7) est courbée en sens inverse dans ses directions principales.

4. Garniture d'étanchéité selon l'une quelconque des revendications 1 à 3, **caractérisée en ce que** la surface courbe (7) est réalisée sous forme de surface en forme de selle.

5. Garniture d'étanchéité selon l'une quelconque des revendications 1 à 4, **caractérisée en ce que** la première lèvre d'étanchéité (6) peut être recourbée.

6. Garniture d'étanchéité selon l'une quelconque des revendications 1 à 5, **caractérisée en ce que** le corps de base présente au moins un dispositif (8) d'un système Poka-Yoke.

7. Agencement comprenant une garniture d'étanchéité selon l'une quelconque des revendications précédentes, un tuyau (2) et une selle de prise (4), la garniture d'étanchéité étant positionnée entre la paroi extérieure (1) du tuyau (2) et la paroi intérieure (3) de la selle de prise (4), et la garniture d'étanchéité étant reçue partiellement dans une rainure (9) de la paroi interne (3) de la selle de prise (4).

8. Agencement selon la revendication 7, **caractérisé en ce que** la première lèvre d'étanchéité (6) de la garniture d'étanchéité s'applique avec le bourrelet (12) contre la paroi interne (3) de la selle de prise (4) et avec l'arête d'étanchéité (11) opposée au bourrelet (12) contre la paroi extérieure (1) du tuyau (2).

9. Agencement selon la revendication 7 ou 8, **caractérisé en ce que** deux lèvres d'étanchéité (13, 14) de la garniture d'étanchéité s'appliquent contre la paroi intérieure de la rainure (9), de préférence au fond de la rainure, et deux lèvres d'étanchéité (6, 15) s'appliquent contre la paroi extérieure (1) du tuyau (2).

10. Agencement selon l'une quelconque des revendications 7 à 9, **caractérisé en ce que** le corps de base (5) de la garniture entoure un foret (16).
